# EUROPEAN PATENT SPECIFICATION

(11) **EP 1 481 530 B1**
(45) Date of publication and mention of the grant of the patent: **21.03.2007**
(21) Application number: 03702546.7
(22) Date of filing: 27.01.2003
(51) Int. Cl.: H04L 29/08

(54) **ACCESS PROVIDER AND SERVER FOR OFFERING AN INTERNET PORTAL HAVING A MENU**
ZUGRIFFSVERSORGER UND SERVER ZUM ANBIETEN EINES INTERNETPORTALS MIT MENÜ
FOURNISSEUR D'ACCES ET SERVEUR OFFRANT UN PORTAIL INTERNET DOTE D'UN MENU

(30) Priority: 30.01.2002 EP 02075363
(43) Date of publication of application: 01.12.2004
(73) Proprietor: Koninklijke KPN N.V., 9726 AE Groningen (NL)
(72) Inventor: ZOM, Pablo, NL-3014 DC Rotterdam (NL); VAN HULTEN, Christian, Cornelis, Maria, NL-2628 AW Delft (NL)
(74) Representative: Wuyts, Koenraad Maria
(86) International application number: PCT/EP2003/000843
(87) International publication number: WO 2003/065687

(56) References cited:
- EP-A- 1 156 650
- WO-A-01/01077
- WO-A-01/50341
- WO-A-01/72062
- WO-A-02/03732

## Description

The invention relates to a server for offering an internet portal comprising a menu comprising menu-items to a mobile terminal.

Such a server is generally used by, inter alia, mobile network providers, with said network-unit for example being a switch, a router, a bridge, a base station etc.

US 6,199,077 discloses a portal server for offering a portal to subscribers using fixed terminals like personal computers coupled to the portal server via a Public Switched Telephony Network (PSTN) or an Integrated Services Digital Network (ISDN). This portal comprises a menu comprising menu-items like Search, Agent, Last, Update and Add, which menu-items, together with the rest of the portal, are being displayed on the terminal's display. Thereto, the portal signal comprising the menu-item signals is transmitted from the portal server to the fixed terminal, resulting in said portal together with said menu comprising said menu-items being displayed entirely or partly respectively dependently upon said display being large enough or not respectively. In response to the activation signal comprising the menu-item code originating from said fixed terminal, for example as a result of said subscriber having made a mouse click on said menu-item, this menu-item is activated, resulting in the start of a Search, the activation of an Agent which may be programmed to perform certain tasks such as obtaining account information, executing simple transactions, returning user-requested notification information about upcoming events, and so on etc.

EP-A-1 156 650 discloses various techniques for searching information are provided using a wireless server and wireless device, such as an Internet-ready cellular phone. As a consumer navigates about a menu displayed at the wireless device, i.e. issues various navigation instructions, the wireless server can receive one or more search parameters from the wireless device. A search operation based on the one or more search parameters can then be performed and the wireless device can then navigate about an existing menu or generate a second menu based on the search.

WO 01/72062 discloses a method of delivering information services to portable terminals, wherein an information service provider generates messages including commands. The messages are propagated as short message service packets or WAP packets to the terminals. The terminals include clients which are able to parse the commands and use them to condition the terminal to process the message and, optionally, to generate a reply message.

The known server is disadvantageous, inter alia, due to offering an internet portal which is insufficiently user-friendly when visiting this portal via a mobile terminal, like for example a mobile phone, having a small(er) sized display.

It is an object of the invention, inter alia, of providing a server as defined in the preamble which can offer an internet portal to a mobile terminal, like for example a mobile phone having a small(er) sized display, in a more user-friendly way.

It is a further object of the invention to provide an access provider comprising a network-unit coupled to a server for offering an internet portal comprising a menu comprising menu-items to a mobile terminal, and to a method for offering an internet portal comprising a menu comprising menu-items to a mobile terminal, and to a processor program product to be run via a server for offering an internet portal comprising a menu comprising menu-items to a mobile terminal, and to a mobile phone for use in combination with such a server, and to a portal signal.

The server according to the invention for offering an internet portal comprising a menu comprising menu-items to a mobile terminal, with at least some of said menu-items each being linked to at least two sub-menu-items, for example comprises
- a transmitting module for transmitting a portal signal to said terminal, which portal signal for example comprises menu-item signals each for displaying at least a part of a menu-item on a display of said terminal, with said portal signal comprising said menu-item signals for example being stored in said server, and/or
- a receiving module for receiving an activation signal from said terminal for activating a menu-item, which activation signal for example comprises a menu-item code defining a menu-item, and/or
- a generating module for generating, in response to a first menu-item code, sub-menu-item signals each for displaying at least a part of a sub-menu-item of a first menu-item on said display, and for generating, in response to a second menu-item code, sub-menu-item signals each for displaying at least a part of a sub-menu-item of a second menu-item on said display.

By providing (linking) at least some of said menu-items each with (to) at least two sub-menu-items, whereby in response to a first (second) menu-item code originating from said mobile phone, sub-menu-item signals are generated and sent to said mobile phone, each for displaying at least a part of a sub-menu-item of a first (second) menu-item on said display, which sub-menu-items are being displayed either in addition to said first (second) menu-item (for example by pasting and/or with an overlap) or by replacing said first (second) menu-item, the internet portal is offered to the mobile phone in an overview-friendly way. In the embodiment of claim 2, by personalizing at least most of said sub-menu-items of said first menu-item (with said first menu-item for example dealing with personal services and for example being named "my services"), with at least most of said sub-menu-items of said second menu-item being non-personalized (with said second menu-item for example dealing with general services and for example being named "all services"), the overview-friendly internet portal has become very user-friendly, due to a user now being guided through the menu dependently upon the user's needs (the need for personalized services or non-personalized services), and getting a well-sorted overview.

The invention is based on the insight, inter alia, that known portals offered to personal computers cannot be offered to mobile phones, and is based upon the basic idea, inter alia, that when the two-dimensional surface is limited, one should go into the third dimension (sub-menus), in a clever way, by using basic distinguishments (like personalized items versus non-personalized items).

The invention solves the problem, inter alia, of providing a server as defined in the preamble which offers an internet portal to a mobile phone in a more user-friendly way.

A further embodiment of the server according to the invention is advantageous in that said server for example comprises
- an addressing module for addressing a service provider for coupling said mobile phone to said service provider (for example partly wirelessly and partly wiredly). Due to said service provider being contacted only after said further activation signal comprising a sub-menu-item code defining a sub-menu-item has been received from said mobile phone, the main menu comprising menu-items now gives a better overview resulting in an increased user-friendlyness, because of these menu-items just giving an overview and not allowing any contacting of service providers. The contacting of service providers is just possible in the sub-menu comprising sub-menu-items or in a subsub-menu comprising subsub-items etc., with said sub-menu being reachable from the main menu (via an activation signal comprising a menu-item code defining the first or second menu-item), with said subsub-menu being reachable from the sub-menu (via a further activation signal comprising a sub-menu-item code) etc.

A further embodiment of the server according to the invention is advantageous in that said server for example comprises
- a supplying module for supplying time-dependent information stored in said server from said server to said mobile phone.

Due to said time-dependent information being supplied only after said further activation signal comprising a sub-menu-item code defining a sub-menu-item of a third menu-item has been received from said mobile phone (with said third menu-item for example dealing with timely (daily/weekly/monthly) updatable news and for example being named "i-magazine"), the main menu comprising menu-items now gives a better overview resulting in an increased user-friendlyness, because of these menu-items just giving an overview and not allowing any supplying of time-dependent information. The supplying of time-dependent information is just possible in the sub-menu comprising sub-menu-items or in a subsub-menu comprising subsub-menu-items etc., with said sub-menu being reachable from the main menu (via an activation signal comprising a menu-item code defining the third menu-item), with said subsub-menu being reachable from the sub-menu (via a further activation signal comprising a sub-menu-item code) etc.

A further embodiment of the server according to the invention is advantageous in that said server for example comprises
- an adjusting module for allowing adjustment of user-dependent information stored in said server in dependence of a receival of an adjustment signal originating from said terminal.

Due to allowing adjustment of user-dependent information only after said further activation signal comprising a sub-menu-item code defining a sub-menu-item of a fourth menu-item has been received, from said mobile phone (with said fourth menu-item for example dealing with adjustable options and for example being named "options"), the main menu comprising menu-items now gives a better overview resulting in an increased user-friendlyness, because of these menu-items just giving an overview and not allowing any adjusting of user-dependent information. The adjusting of user-dependent information is just possible in the sub-menu comprising sub-menu-items or in a subsub-menu comprising subsub-menu-items etc., with said sub-menu being reachable from the main menu (via an activation signal comprising a menu-item code defining the fourth menu-item), with said subsub-menu being reachable from the sub-menu (via a further activation signal comprising a sub-menu-item code) etc.

A further embodiment of the server according to the invention is advantageous in that for example five menu-items offer time-dependent information, personalized services, non-personalized services, adjustment of user-dependent information and help, in this particular order on said display.

Embodiments of the access provider according to the invention, of the method according to the invention, of the processor program product according to the invention, of the mobile terminal according to the invention and of the portal signal according to the invention correspond with the embodiments of the server according to the invention.

In view of the above, it will be clear that further servers, further access providers, further methods, further processor program products, further (mobile or non-mobile) terminals and/or further portal signals can be defined using one or more of the above-described features and/or using further features disclosed in the summary, without departing from the scope of this invention.

These and other aspects of the invention will be apparent from and elucidated with reference to the embodiments(s) described hereinafter.
Figure 1 discloses an access provider according to the invention comprising server according to the invention, and
figure 2 discloses a main menu and first sub-menus for use in combination with a server according to the invention.

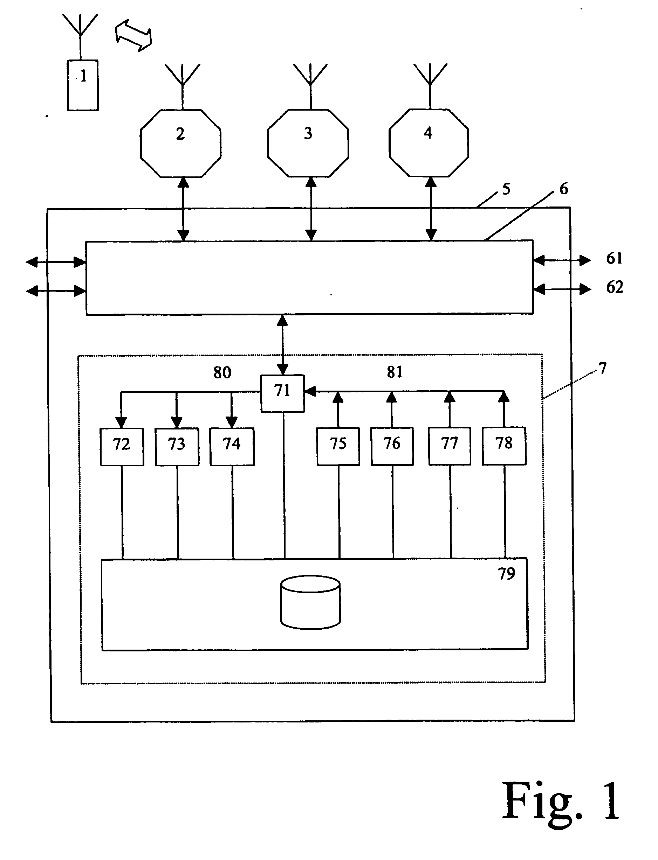

Figure 1 discloses a mobile phone 1 and three base stations 2,3,4 which are coupled to (more general: communicate with) an access provider 5 comprising a switch 6 and a server 7. Switch 6 is coupled to (more general: communicates with) each one of said base stations 2,3,4, to (with) server 7, to (with) service providers via couplings 61,62 and to (with) further networks via further couplings. Server 7 comprises an interface 71 of which an in/output is coupled to (more general: communicates with) switch 6 and of which an output is coupled to (more general: communicates with) a receiving bus 80 and of which an input is coupled to (more general: communicates with) a transmitting bus 81. A control input of interface 71 is coupled to (more general: communicates with) a processor/memory 79, which is further coupled to (more general: communicates with) control inputs of receiving module 74, adjusting module 73 and further module 72, of which the inputs are coupled to (more general: communicate with) receiving bus 80. Processor/memory 79 is further coupled to (more general: communicates with) control inputs of transmitting module 75, generating module 76, addressing module 77 and supplying module 78, of which the outputs are coupled to (more general: communicate with) transmitting bus 81.

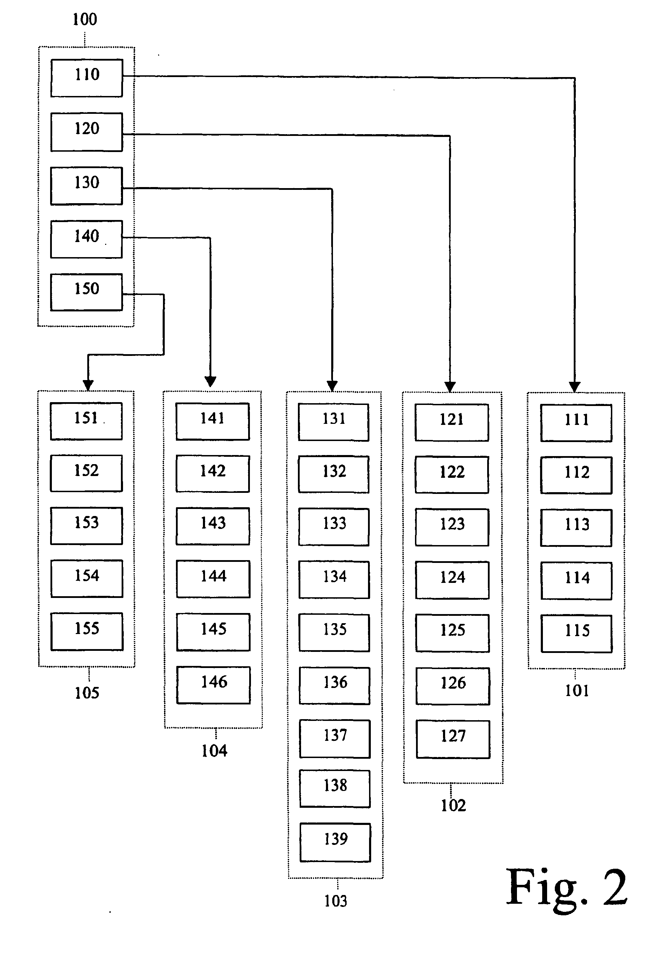

Figure 2 discloses a main menu 100 and sub-menus 101,102,103,104,105 for use in combination with a server 7 according to the invention. Main menu 100 comprises five menu-items 110,120,130,140,150 respectively, being a first, second, third, fourth and fifth menu-item respectively, each one giving access to (or being linked to) sub-menus 101,102,103,104,105 respectively which comprise sub-menu-items 111-115,121-127,131-139,141-146,151-155 respectively.

A user operating mobile phone 1 usually has two options for visiting the Internet: Said user can type a URL by using the mobile phone's keys or visit the provider's portal by selecting the portal-option from the mobile phone's menu, again by using the mobile phone's keys. After having selected the portal-option, a portal-code is transmitted from mobile phone 1 via for example base station 2 and switch 6 to server 7. Interface 71 supplies this portal-code to receiving bus 80, and via receiving module 74 said portal-code is supplied to processor/memory 79, all under control of this processor/memory 79, which detects this portal-code and in response supplies transmitting module 75 with a portal signal comprising menu-item signals, which portal signal, under control of processor/memory 79, via transmitting bus 81 and interface 71 is sent to switch 6, which transmits this portal-signal via base station 3 to mobile phone 1. As a result, said user can watch the portal comprising the main menu 100 including the five menu-items 110,120,130,140,150 on the display of the mobile phone 1, either entirely or partly (whereby either just some of said five menu-items 110,120,130,140,150 are shown on the display, or just parts of these five menu-items 110, 120, 130, 140, 150 are shown on the display, or a combination of both possibilities).

According to prior art, these menu-items for example correspond with Search, Agent, Last, Update and Add. In case of said user being interested in starting a Search or activating an Agent, said user must activate the corresponding menu-item, by using the mobile phone's keys, which results in the sending from said mobile phone 1 to said access provider 5 of an activation signal comprising a corresponding menu-item code defining the corresponding menu-item. This menu-item code is either an identification code identifying the corresponding menu-item, or is a location code defining the location of this corresponding menu-item and thereby indirectly also identifying the corresponding menu-item. This menu-item code is received in server 7, more particular by receiving module 74, which informs processor/memory 79. As a result, a Search is started, or an Agent is activated etc., with this start of the Search or the activiation of the Agent being shown on the mobile phone's display.

Due to displays of mobile phones being small(er) sized, and due to these prior art menu-items directly starting external actions and being divers and unsorted, with nowadays many external actions being needed by the users, either said users must scroll a lot (in case of many external actions being offered), or said users just get a limited number of possibilities via the prior art portal. This is user-friendly insufficiently.

According to the invention, said menu-items 110,120,130,140,150 respectively are each linked to sub-menu-items 111-115,121-127,131-139,141-146,151-155 respectively, with server 7 comprising generating module 76 for generating, in response to a first menu-item code (defining menu-item 110), sub-menu-item signals for displaying sub-menu-items 111-115 of first menu-item 110 on said display, and for generating, in response to a second menu-item code (defining menu-item 120), sub-menu-item signals for displaying sub-menu-items 121-127 of second menu-item 120 on said display. This increases the user's overview a lot. In addition, with at least most (preferably all) of sub-menu-items 111-115 of first menu-item 110 being personalized, and with at least most (preferably all) of said sub-menu-items 121-127 of said second menu-item 120 being non-personalized, the user is guided through the menu dependently upon user's needs, and gets a well-sorted overview. As a result, the user-friendlyness is increased much.

Menu-item 110 for example offers personalized services and is called "my services", with sub-menu-item 111 corresponding with a user's personal page and being named "my page" and allowing access to this page, with sub-menu-item 112 corresponding with a first service and being named "link to CP A" and allowing access to this service, with sub-menu-item 113 corresponding with a second service and being named "link to CP B" and allowing access to this service, with sub-menu-item 114 corresponding with details and being named "details" and allowing access to the details of the personalized services, and with sub-menu-item 115 corresponding with unsubscriptions and being named "unsubscribe" and allowing access to unsubscription possibilities of personalized services. Both lastmentioned accesses to services (to details and to unsubscription possibilities) may involve access to a direct service of a service provider coupled to coupling 61 or 62 (like the other services mentioned before) but may also involve access (possibly together with manipulation) to information stored in server 7.

Menu-item 120 for example offers non-personalized services and is called "all services", with sub-menu-item 121 corresponding with newsflash info and being named "news-weather-sports" and allowing access to this service, with sub-menu-item 122 corresponding with financial info and being named "finance" and allowing access to this service, with sub-menu-item 123 corresponding with travelling info and being named "travel" and allowing access to this service, with sub-menu-item 124 corresponding with shopping info and being named "shopping" and allowing access to this service, with sub-menu-item 125 corresponding with games and being named "fun-games" and allowing access to this service, with sub-menu-item 126 corresponding with communication info and being named "communication" and allowing access to this service, and with sub-menu-item 127 corresponding with the use of this menu abroad and being named "i-mode abroad" and allowing the use of this portal from abroad.

For getting the abovementioned accesses to services, said user must generate a further activation signal comprising a sub-menu-item code defining a sub-menu-item, again by using the mobile phone's keys, which further activation signal is sent to receiving module 74, which informs processor/memory 79. In response, processor/memory 79 controls addressing module 77 in such a way that an address of a service provider is generated for addressing this service provider for coupling said mobile phone 1 to said service provider via switch 6 and coupling 61 or 62.

Menu-item 130 for example offers time-dependent information like timely updatable news and is called "i-magazine", with sub-menu-item 131 corresponding with news websites and being named "new sites" and allowing access to these sites, with sub-menu-item 132 corresponding with updated websites and being named "updated sites" and allowing access to these sites, with sub-menu-item 133 corresponding with operator's offers and being named "operator friendly info" and allowing access to this service, etc.

Although sub-menu-items 131 and 132 give access to other sites, it should be noted that, the time-dependent information which possibly gives access to other services is stored itself in processor/memory 79 in server 7. For getting the time-dependent information, said user must generate a further activation signal comprising a sub-menu-item code defining a sub-menu-item, again by using the mobile phone's keys, which further activation signal is sent to receiving module 74, which informs processor/memory 79. In response, processor/memory 79 controls supplying module 78 in such a way that said time-dependent information (like for example new/amended URLs) is supplied to mobile phone 1. Then, said user has the option of for example leaving the portal and visiting these new/amended URLs etc., as described before, for example via addressing module 77.

Menu-item 140 for example offers adjustable options and is called "options", with sub-menu-item 141 corresponding with the user's mail address and being named "mail address" and allowing change of mail address, with sub-menu-item 142 corresponding with pin-code info and being named "i-mode pin" and allowing change of pin-code, with sub-menu-item 143 corresponding with a menu language and being named "language" and allowing adjustment of menu language, and with sub-menu-item 144 corresponding with subscriptions and being named "subscription order" and allowing access to subscription possibilities to personalized services, etc.

For getting access to this adjusting of user-dependent information, said user must generate a further activation signal comprising a sub-menu-item code defining a sub-menu-item, again by using the mobile phone's keys, which further activation signal is sent to receiving module 74, which informs processor/memory 79. In response, processor/memory 79 controls adjusting module 73 in such a way that, in response to a receival of an adjustment signal originating from said user at mobile phone 1 (who has used the mobile phone's keys) and arriving via switch 6 and interface 71, adjustment of user-dependent information stored in said server is now allowed.

In case of additional authorisation and/or authentication being required, further unit 72 may be involved for making challenge signed responses, checking passwords, codewords etc.

Menu-item 150 for example offers help and is called "help", with sub-menu-items 151 etc. corresponding with different kinds of help.

Each possibility described before can be combined with each other possibility. Each module, shown in the form of a block or not shown, can be 100% hardware, 100% software or a mixture of both. Each block shown or not shown can be integrated with each other block shown and/or not shown per server 7, but also per combination of server 7 and switch 6. In addition to processor/memory 79, each block can have a further processor and/or further memory not shown for efficiency purposes. The bus 80,81 may be replaced by separate connections, thereby for example introducing multiplexers and demultiplexers. Interface 71 may comprise a hardware switch, duplexer, splitter etc. but may also comprise just software or a combination of both. For example (parts of) the software (are) is thereby for example written in cHTML.

Mobile phone 1 is just an example of a mobile terminal, but other (mobile or non-mobile) terminals are not to be excluded, like digital assistants, cordless phones etc. In other words, said terminal will generally be portable and have a small(er) sized display compared to ordinary personal computers. Mobile phones nowadays also comprise menus and submenus, with for example either one menu-item of one sub-menu-item in this mobile phone being linked to the menu and its sub-menus in the portal according to the invention.

The fact that the portal according to the invention comprises the menu and its submenus does not exclude that there can be different portal signals (different portal pages) not showing this menu but for example just showing a link to this menu (via an other portal page). However, usually all menu-items and all sub-menu-items are stored in the server according to the invention. A menu in general gives an overview of menu-items which each give access to sub-menu-items. This does not exclude that further information is shown, in other words the portal signal comprising the menu-items may comprise further information.

According to the invention, the portal comprises a menu having menu-items, with at least two menu-items each being linked (in the same server) to sub-menu-items, one of said menu-items corresponding with personalized info, and the other with non-personalized info. However, further distinguishments can be found in this invention: for example the first, second and third menu-items deal with a user finally leaving the portal (via activating sub-menu-items or subsub-menu-items of these menu-items, not via activating menu-items in the main menu, which is a yet further distinguishment), and the fourth menu-item deal with adjusting user-dependent information stored in said server, in which case said user will not leave the portal.

So, different features can be found in this invention, like for example
- the offering of an internet portal comprising a menu (100) comprising menu-items (110,120,130,140,150),
- to a (mobile or non-mobile) terminal (1),
- a transmitting module (75) for transmitting a portal signal to said terminal,
- which portal signal comprises menu-item signals each for displaying at least a part of a menu-item on a display of said terminal,
- with said portal signal comprising said menu-item signals being stored in said server,
- a receiving module (74) for receiving an activation signal from said terminal for activating a menu-item,
- which activation signal comprises a menu-item code defining a menu-item,
- wherein at least some of said menu-items each are linked to at least two sub-menu-items (111-115,121-127,131-139,141-146,151-155),
- a generating module (76) for generating, in response to a first menu-item code, sub-menu-item signals each for displaying at least a part of a sub-menu-item of a first menu-item on said display, and for generating, in response to a second menu-item code, sub-menu-item signals each for displaying at least a part of a sub-menu-item of a second menu-item on said display,
- with at least most of said sub-menu-items (111-115) of said first menu-item (110) being personalized,
- with at least most of said sub-menu-items (121-127) of said second menu-item (120) being non-personalized,
- an addressing module (77) for, in response to a receival from said terminal of a further activation signal comprising a sub-menu-item code defining a sub-menu-item, addressing a service provider for coupling said terminal to said service provider,
- a supplying module (78) for, in response to a receival from said terminal of a further activation signal comprising a sub-menu-item code defining a sub-menu-item of a third menu-item (130), supplying time-dependent information stored in said server from said server to said terminal,
- an adjusting module (73) for, in response to a receival from said terminal of a further activation signal comprising a sub-menu-item code defining a sub-menu-item of a fourth menu-item (140), allowing adjustment of user-dependent information stored in said server in dependence of a receival of an adjustment signal originating from said terminal, and/or
- five menu-items offering time-dependent information (130), personalized services (110), non-personalized services (120), adjustment of user-dependent information (140) and help (150), in this particular order on said display.

## Claims

1. Server (7) for offering an internet portal comprising a menu (100) comprising menu-items (110,120, 130,140, 150) to a mobile terminal (1) and comprising
- a transmitting module (75) for transmitting a portal signal to said terminal, which portal signal comprises menu-item signals each for displaying at least a part of a menu-item on a display of said terminal, with said portal signal comprising said menu-item signals being stored in said server,
**characterized by**
- a receiving module (74) for receiving an activation signal from said terminal for activating a menu-item, the activation signal comprises a menu-item code defining a menu-item, wherein at least some of said menu-items each are linked to at least two sub-menu-items (111-115,121-127, 131-139,141-146, 151- 155), and
- a generating module (76) for generating, in response to a first menu-item code, sub-menu-item signals each for displaying at least a part of a sub-menu-item of a first menu-item on said display, and for generating, in response to a second menu-item code, sub-menu-item signals each for displaying at least a part of a sub-menu-item of a second menu-item on said display.

2. Server according to claim 1, wherein at least most of said sub-menu-items (111-115) of said first menu-item (110) being personalized, and with at least most of said sub-menu-items (121-127) of said second menu-item (120) being non-personalized.

3. Server according to claim 1 or 2 , wherein said server comprises an addressing module (77) for, in response to a receival from said terminal of a further activation signal comprising a sub- menu-item code defining a sub-menu-item, addressing a service provider for coupling said terminal to said service provider.

4. Server according to claim 1, 2 or 3, wherein said server comprises a supplying module (78) for, in response to a receival from said terminal of a further activation signal comprising a sub-menu-item code defining a sub-menu-item of a third menu-item (130), supplying time-dependent information stored in said server from said server to said terminal.

5. Server according to claim 1, 2, 3 or 4, wherein said server comprises an adjusting module (73) for, in response to a receival from said terminal of a further activation signal comprising a sub- menu-item code defining a sub-menu-item of a fourth menu-item (140), allowing adjustment of user-dependent information stored in said server in dependence of a receival of an adjustment signal originating from said terminal.

6. Server according to claim 1, 2, 3, 4 or 5, wherein five menu-items offer time-dependent information (130), personalized services (110), non-personalized services (120), adjustment of user-dependent information (140) and help (150), in this particular order on said display.

7. Access provider (5) comprising a network-unit (6) coupled to a server (7) according to claim 1 for offering an internet portal comprising a menu (100) comprising menu-items (110,120, 130,140, 150) to a mobile terminal (1) and comprising
- a transmitting module (75) for transmitting a portal signal to said terminal via said network-unit, which portal signal comprises menu-item signals each for displaying at least a part of a menu-item on a display of said terminal, with said portal signal comprising said menu-item signals being stored in said server,
**characterized by**
- a receiving module (74) for receiving an activation signal from said terminal via said network-unit for activating a menu-item, the activation signal comprises a menu-item code defining a menu-item, wherein at least some of said menu-items each are linked to at least two sub-menu-items (111-115,121-127, 131-139,141-146, 151-155), and
- a generating module (76) for generating, in response to a first menu-item code, sub-menu-item signals each for displaying at least a part of a sub-menu-item of a first menu-item on said display, and for generating, in response to a second menu-item code, sub-menu-item signals each for displaying at least a part of a sub-menu-item of a second menu-item on said display.

8. Access provider according to claim 7, wherein at least most of said sub-menu-items (111-115) of said first menu-item (110) being personalized, and with at least most of said sub-menu-items (121-127) of said second menu-item (120) being non-personalized.

9. Access provider according to claim 7 or 8, wherein said access provider comprises an addressing module (77) for, in response to a receival from said terminal via said network terminal of a further activation signal comprising a sub-menu-item code defining a sub-menu-item, addressing a service provider for coupling said terminal to said service provider via said network unit.

10. Access provider according to claim 7, 8 or 9, wherein said access provider comprises a supplying module (78) for, in response to a receival from said terminal of a further activation signal comprising a sub-menu-item code defining a sub-menu-item of a third menu-item (130), supplying time-dependent information stored in said server from said server to said terminal via said network-unit.

11. Access provider according to claim 7, 8, 9 or 10, wherein said access provider comprises an adjusting module (73) for, in response to a receival from said terminal via said network-unit of a further activation signal comprising a sub-menu-item code defining a sub-menu-item of a fourth menu-item (140), allowing adjustment of user-dependent information stored in said server in dependence of a receival of an adjustment signal originating from said terminal via said network-unit.

12. Access provider according to claim 6, 7, 8, 9, 10 or 11, wherein five menu-items offer time-dependent information (130), personalized services (110), non-personalized services (120), adjustment of user-dependent information (140) and help (150), in this particular order on said display.

13. Method for offering an internet portal comprising a menu comprising menu-items to a mobile terminal and comprising the steps of
- transmitting a portal signal to said terminal, which portal signal comprises menu-item signals each for displaying at least a part of a menu-item on a display of said terminal, with said portal signal comprising said menu-item signals being stored in a server
**characterized by**
- receiving an activation signal from said terminal for activating a menu-item, the activation signal comprises a menu-item code defining a menu-item, wherein at least some of said menu-items each are linked to at least two sub-menu-items, and
- generating, in response to a first menu-item code, sub-menu- item signals each for displaying at least a part of a sub-menu- item of a first menu-item on said display, and for generating, in response to a second menu-item code, sub-menu-item signals each for displaying at least a part of a sub-menu-item of a second menu-item on said display.

14. Method according to claim 13, wherein at least most of said sub-menu-items of said first menu-item being personalized, and with at least most of said sub-menu-items of said second menu-item being non-personalized.

15. Processor program product comprising code for performing functions when run on a server for offering an internet portal comprising a menu comprising menu-items to a mobile terminal, said server according to claim 1, and comprising
- a transmitting function for transmitting a portal signal to said terminal, which portal signal comprises menu-item signals each for displaying at least a part of a menu-item on a display of said terminal, with said portal signal comprising said menu-item signals being stored in said server
**characterized by**
- a receiving function for receiving an activation signal from said terminal for activating a menu-item, the activation signal comprises a menu-item code defining a menu-item, wherein at least some of said menu-items each are linked to at least two sub-menu-items, and
- a generating function for generating, in response to a first menu-item code, sub-menu-item signals each for displaying at least a part of a sub-menu-item of a first menu-item on said display, and for generating, in response to a second menu-item code, sub-menu-item signals each for displaying at least a part of a sub-menu-item of a second menu-item on said display.

16. Processor program according to claim 15, wherein at least most of said sub-menu-items of said first menu-item being personalized, and with at least most of said sub-menu-items of said second menu-item being non-personalized.

17. Mobile terminal (1) adapted for use in combination with a server (7) for offering an internet portal comprising a menu (100) comprising menu-items (110,120, 130,140, 150) according to claim 1 to said mobile terminal (1) and said mobile terminal (1) comprising:
- a receiving module (75) for receiving a portal signal transmitted to said mobile terminal (1), which portal signal comprises menu-item signals each for displaying at least a part of a menu-item on a display of said mobile terminal (1), with said portal signal comprising said menu-item signals being stored in said server (7)
**characterized by**
- a transmitting module (74) for transmitting an activation signal from said mobile terminal to said server (7) for activating a menu-item, which activation signal comprises a menu-item code defining a menu-item, wherein at least some of said menu-items each are linked to at least two sub-menu-items (111-115,121-127, 131-139,141-146, 151- 155),
- the receiving module adapted for receiving sub-menu-item signals from the server (7).

18. Mobile terminal according to claim 17, wherein at least most of said sub-menu-items (111-115) of said first menu-item (110) being personalized, and with at least most of said sub-menu-items (121-127) of said second menu-item (120) being non-personalized.

19. Portal signal adapted for offering an internet portal comprising a menu (100) comprising menu-items (110,120, 130,140, 150) via a server (7) according to claim 1,
said portal signal comprises menu-item signals each for displaying at least a part of a menu-item on a display of said mobile terminal (1), with said portal signal comprising said menu-item signals being stored in said server (7),
**characterized by** said portal signal further comprising
- an activation signal from said mobile terminal (1) via said network-unit for activating a menu- item, which activation signal comprises a menu-item code defining a menu-item, wherein at least some of said menu-items each are linked to at least two sub-menu-items (111-115,121-127, 131-139,141-146, 151- 155), and
sub-menu-item signals each being adapted for displaying at least a part of a sub-menu-item of a first menu-item on said display, and said sub-menu-item signals each being adapted for displaying at least a part of a sub-menu-item of a second menu-item on said display.

20. Portal signal according to claim 19, wherein at least most of said sub-menu-items (111-115) of said first menu-item (110) being personalized, and with at least most of said sub-menu-items (121-127) of said second menu-item (120) being non-personalized.

## Patentansprüche

1. Server (7) zum Anbieten eines Internet-Portals, umfassend ein Menü (100), umfassend Menügegenstände (110, 120, 130, 140, 150) für ein mobiles Endgerät (1) und umfassend
- ein Übertragungsmodul (75) zum Übertragen eines Portal-signals an das besagte Endgerät, welches Portalsignal Menügegenstandssignale umfasst, die jeweils zur Darstellung von mindestens einem Teil eines Menügegenstandes auf einem Anzeige des besagten Endgeräts vorgesehen ist, wobei das besagte Portalsignal die besagten Menügegenstandssignale umfasst, die auf dem besagten Server gespeichert sind,
**gekennzeichnet durch**
- ein Empfangsmodul (74) zum Empfang eines Aktivierungssignals von dem besagten Endgerät zum Aktivieren eines Menügegenstandes, wobei das Aktivierungssignal einen Menügegenstandscode umfasst, der einen Menügegenstand definiert, wobei mindestens ein Teil der besagten Menügegenstände jeweils mit mindestens zwei Untermenügegenständen (111-115, 121-127, 131-139, 141-146, 151-155) verbunden sind, und
- ein Erzeugermodul (76) zum Erzeugen, in Antwort auf einen ersten Menügegenstandscode, von Untermenügegenstandssignalen, wobei jedes jeweils zur Anzeige von mindestens einem Teil eines Untermenügegenstandes eines ersten Menügegenstandes auf der besagten Anzeige vorgesehen ist, und zum Erzeugen, in Antwort auf einen zweiten Menügegenstandscode, von Untermenügegenstandssignalen, wobei jedes jeweils zur Anzeige von mindestens einem Teil eines Untermenügegenstandes eines zweiten Menügegenstandes auf der besagten Anzeige vorgesehen ist.

2. Server nach Anspruch 1, bei dem mindestens die meisten der besagten Untermenügegenstände (111-115) des besagten ersten Menügegenstandes (110) personalisiert sind, und bei dem mindestens die meisten der besagten Untermenügegenstände (121-127) des besagten zweiten Menügegenstandes (120) nicht personalisiert sind.

3. Server nach Anspruch 1 oder 2, bei dem der besagte Server ein Adressiermodul (77) umfasst, um in Antwort auf den Empfang von dem besagten Endgerät eines weiteren Aktivierungssignals, umfassend einen Untermenügegenstandscode, der einen Untermenügegenstand definiert, einen Diensteanbieter zu adressieren, um das besagte Endgerät mit dem besagten Diensteanbieter zu verbinden.

4. Server nach einem der Ansprüche 1, 2 oder 3, bei dem der besagte Server ein Zuliefermodul (78) umfasst, um in Antwort auf einen Empfang von dem besagten Endgerät eines weiteren Aktivierungssignals, das einen Untermenügegenstandscode umfasst, der einen Untermenügegenstand eines dritten Menügegenstandes (130) definiert, zeitabhängige Informationen, die in dem besagten Server gespeichert sind, von dem besagten Server zu dem besagten Endgerät zu liefern.

5. Server nach einem der Ansprüche 1, 2, 3 oder 4, wobei der besagte Server ein Einstellungsmodul (73) aufweist, um in Antwort auf einen Empfang von dem besagten Endgerät eines weiteren Aktivierungssignals, umfassend einen Untermenügegenstandscode, der einen Untermenügegenstand eines vierten Menügegenstandes (40) definiert, was die Einstellung von benutzerabhängigen Informationen gestattet, welche in dem besagten Server in Abhängigkeit von einem Empfang eines Einstellungssignals gespeichert wird, welches von dem besagten Endgerät ausgeht.

6. Server nach einem der Ansprüche 1, 2, 3, 4 oder 5, bei dem fünf Menügegenstände zeitabhängige Informationen (30), personalisierte Dienste (110), nicht personalisierte Dienste (120), Einstellung von benutzerabhängigen Informationen (140) und Hilfe (150), in dieser bestimmten Ordnung, auf der besagten Anzeige anbieten.

7. Zugangsanbieter (5), umfassend eine Netzwerk-Einheit (6), die mit einem Server (7) nach Anspruch 1 verbunden ist, um ein Internet-Portal, welches ein Menü (100) umfasst, das Menügegenstände (110, 120, 130, 140, 150) umfasst, mit einem mobilen Endgerät (1) anzubieten und umfassend
- ein Übertragungsmodul (75) zum Übertragen eines Portal-Signals an das besagte Endgerät über die besagte Netzwerk-Einheit, welches Portal-Signal Menügegenstandssignale jeweils zur Darstellung von mindestens einem Teil eines Menügegenstandes auf einer Anzeige des besagten Endgeräts umfasst, wobei das besagte Portalsignal, welches die besagten Menügegenstandssignale umfasst, in dem besagten Server gespeichert wird,
**gekennzeichnet durch**
- ein Empfangs-Modul (74) zum Empfang eines AktivierungsSignals von dem besagten Endgerät über die besagte Netzwerk-einheit zum Aktivieren eines Menügegenstandes, wobei das Aktivierungssignal mindestens einen Menügegenstandscode umfasst, der einen Menügegenstand definiert, wobei mindestens einige der besagten Menügegenstände mit mindestens zwei Untermenügegenständen verbunden sind (111-115, 121-127, 131-139, 141-146, 151-155), und
- ein Erzeuger-Modul (76) zum Erzeugen, in Antwort auf einen ersten Menügegenstandscode, Untermenügegenstandssignale, jedes jeweils zur Darstellung von mindestens einem Teil eines Untermenügegenstandes eines ersten Menügegenstandes auf der besagten Anzeige, und zum Erzeugen, in Antwort auf einen zweiten Menügegenstandscode, von Untermenügegenstandssignalen, jedes jeweils zur Darstellung von mindestens einem Teil eines Untermenügegenstandes eines zweiten Menügegenstandes auf der besagten Anzeige.

8. Zugangsanbieter nach Anspruch 7, bei dem mindestens die meisten der besagten Untermenügegenstände (111-115) des besagten ersten Menügegenstandes (110) personalisiert sind und bei dem mindestens die meisten der besagten Untermenügegenstände des zweiten Menügegenstandes (120) nicht personalisiert sind.

9. Zugangsanbieter nach Anspruch 7 oder 8, bei dem der besagte Zugangsanbieter ein Adressiermodul (77) umfasst, um in Antwort auf einen Empfang von dem besagten Endgerät über die besagten Netzwerk-Endgeräte von einem weiteren AktivierungsSignal, welches einen Untermenügegenstandscode umfasst, der einen Untermenügegenstand definiert, einen Diensteanbieter zum Verbinden des besagten Endgeräts mit dem besagten Diensteanbieter über die besagte Netzwerk-Einheit zu adressieren.

10. Zugangsanbieter nach Anspruch 7, 8 oder 9, bei dem der besagte Zugangsanbieter ein Liefer-Modul (78) umfasst, um in Antwort auf einen Empfang von dem besagten Endgerät von einem weiteren Aktivierungssignal, der einen Untermenügegenstandscode umfasst, der einen Untermenügegenstand eines dritten Menügegenstandes (130) definiert, zeitabhängige Informationen, die in dem besagten Server gespeichert sind, von dem besagten Server zu dem besagten Endgerät über die besagte Netzwerk-Einheit zu liefern.

11. Zugangsanbieter nach Anspruch 7, 8, 9 oder 10, bei dem der besagte Zugangsanbieter ein Einstellungs-Modul (73)umfasst, um in Antwort auf einen Empfang von dem besagten Endgerät über die besagte Netzwerk-Einheit von einem weiteren Aktivierungssignal, umfassend einen Untergegenstandscode, der einen Untermenügegenstand eines vierten Menügegenstandes (140) definiert, der eine Einstellung von benutzerabhängigen Informationen, die in dem besagten Server gespeichert sind, in Abhängigkeit von einem Empfang eines EinstellungsSignals, welches von dem besagten Endgerät ausgeht, über die besagte Netzwerk-Einheit zu gestatten.

12. Zugangsanbieter nach Anspruch 6, 7, 8, 9, 10 oder 11, wobei fünf Menügegenstände zeitabhängige Informationen (130), personalisierte Dienste (110), nicht personalisierte Dienste (120), Einstellung der benutzerabhängigen Informationen (140) und Hilfe (150), in diesem Falle in dieser Ordnung, auf der besagten Anzeige anbieten.

13. Verfahren zum Anbieten eines Internet-Portals, umfassend ein Menü, umfassend Menügegenstände, für ein mobiles Endgerät und umfassend die Schritte von
- Übertragen eines Portal-Signals an das besagte Endgerät, welches Portalsignal Menügegenstandssignale jeweils zum Darstellen von mindestens einem Teil eines Menügegenstandes auf einer Anzeige des besagten Endgerätes umfasst, wobei das besagte Portalsignal, das die besagten Menügegenstandssignale umfasst, in einem Server gespeichert ist,
**gekennzeichnet durch**
- Empfangen eines Aktivierungssignals von dem besagten Endgerät zum Aktivieren eines Menügegenstandes, wobei das Aktivierungssignal einen Menügegenstandscode umfasst, der einen Menügegenstand definiert, wobei mindestens einige der besagten Menügegenstände jeweils mit mindestens zwei Untermenügegenständen verbunden sind, und
Erzeugen, in Antwort auf einen ersten Menügegenstandscode, von Untermenügegenstandssignalen, jedes jeweils zum Darstellen von mindestens einem Teil eines Untermenügegenstandes von einem ersten Menügegenstand auf der besagten Anzeige, und zum Erzeugen, in Antwort auf einen zweiten Menügegenstandscode, von Untermenügegenstandssignalen, jedes jeweils zum Darstellen von mindestens einem Teil eines Untermenügegenstandes von einem zweiten Menügegenstand auf der besagten Anzeige.

14. Verfahren nach Anspruch 13, bei dem mindestens die meisten der besagten Untermenügegenstände des besagten ersten Menügegenstandes personalisiert sind und bei dem mindestens die meisten der besagten Untermenügegenstände des besagten zweiten Menügegenstandes nicht personalisiert sind.

15. Prozessorprogrammprodukt, umfassend Codes zum Durchführen von Funktionen, wenn sie auf einem Server laufen, zum Anbieten eines Internet-Portals, umfassend ein Menü, umfassend Menügegenstände für ein mobiles Endgerät, wobei der besagte Server gemäss Anspruch 1 ausgestaltet ist, und umfassend
- eine Übertragungsfunktion zum Übertragen eines Portal-Signals an das besagte Endgerät, welches Portal-Signal Menügegenstandssignale umfasst, jedes jeweils zum Darstellen von mindestens einem Teil eines Menügegenstandes auf einer Anzeige des besagten Endgeräts, wobei das besagte Portalsignal, welches die besagten Menügegenstandssignale umfasst, in dem besagten Server gespeichert ist,
**gekennzeichnet durch**
- eine Empfangs-Funktion zum Empfangen eines AktivierungsSignals von dem besagten Endgerät zur Aktivierung eines Menügegenstandes, wobei das Aktivierungssignal einen Menügegenstandscode umfasst, der einen Menügegenstand definiert, wobei mindestens einige der besagten Menügegenstände jeweils mit mindestens zwei Untermenügegenständen verbunden sind, und
- eine Erzeuger-Funktion zum Erzeugen, in Antwort auf einen ersten Menügegenstandscode, von Untermenügegenstandssignalen, jedes jeweils zur Darstellung von mindestens einem Teil eines Untermenügegenstandes eines ersten Menügegenstandes auf der besagten Anzeige, und zum Erzeugen, in Antwort auf einen zweiten Menügegenstandscode, von Untermenügegenstandssignalen, jedes jeweils zur Darstellung von mindestens einem Teil eines Untermenügegenstandes eines zweiten Menügegenstandes auf der besagten Anzeige.

16. Prozessorprogramm nach Anspruch 15, bei dem mindestens die meisten der besagten Untermenügegenstände des besagten ersten Menügegenstandes personalisiert sind und bei dem mindestens die meisten der besagten Untermenügegenstände der besagten zweiten Menügegenstände nicht personalisiert sind.

17. Mobiles Endgerät (1), angepasst zum Einsatz in Kombination mit einem Server (7) zum Anbieten eines Internet-Portals, umfassend ein Menü (100), umfassend Menügegenstände (110, 120, 130, 140, 150) gemäss Anspruch 1, mit dem besagten mobilen Endgerät (1) und wobei das besagte mobile Endgerät (1) umfasst;
- ein Empfangsmodul (75) zum Empfangen eines Portalsignals, welches an das besagte mobile Endgerät (1) übertragen worden ist, welches Portalsignal Menügegenstandsignale jeweils zur Darstellung von mindestens einem Tei eines Menügegenstandes auf einer Anzeige des besagten mobilen Endgeräts umfasst, wobei das besagte Portalsignal, welches die besagten Menügegenstandsignale umfasst, in dem besagten Server (7) gespeichert ist,
**gekennzeichnet durch**
ein Übertragungsmodul (74) zum Übertragen eines Aktivierungssignals von dem besagten mobilen Endgerät (1) mit dem besagten Server zum Aktivieren eines Menügegenstandes, welches Aktivierungssignal einen Menügegenstandscode umfasst, der einen Menügegenstand definiert, wobei mindestens einige der besagten Menügegenstände jeweils mit mindestens zwei Untermenügegenständen verbunden sind (111-115, 121-127, 131-139, 141-146, 151-155),
ein Empfangsmodul, welches zum Empfang von Untermenügegenstandsignalen von dem Server geeignet ist.

18. Mobiles Endgerät gemäss Anspruch 17, bei dem mindestens die meisten der besagten Untermenügegenstände (111-115) des besagten ersten Menügegenstandes (110) personalisiert sind, und bei dem mindestens die meisten der besagten Untermenügegenstände (121-127) des besagten zweiten Menügegenstandes (120) nicht personalisiert sind.

19. Portal-Signal, geeignet zum Anbieten eines Internet-Portals, umfassend ein Menü (100), umfassend Menügegenstände (110, 120, 130, 140, 150) über einen Server (7) gemäss Anspruch 1,
- wobei das besagte Signal Menügegenstandsignale jeweils zur Darstellung von mindestens einem Teil eines Menügegenstandes auf einer Anzeige des besagten mobilen Endgeräts (1) umfasst, wobei das besagte Portalsignal, welches das besagte Menügegenstandsignal umfasst, in dem besagten Server (7) gespeichert wird,
**dadurch gekennzeichnet, dass**
- das besagte Portal-Signal weiterhin umfasst: ein Aktivierungssignal von dem besagten Endgerät (1) über die besagte Netzwerk-Einheit zur Aktivierung eines Menügegenstandes, welches Aktivierungssignal einen Menügegenstandscode umfasst, der einen Menügegenstand definiert, wobei mindestens einige der besagten Menügegenstände jeweils mit mindestens zwei Untermenügegenständen (11115, 121-127, 131-139, 141-146, 151-155) verbunden sind, und
- Untermenügegenstandssignale, die jeweils geeignet sind, um mindestens einen Teil eines Untermenügegenstandes eines ersten Menügegenstandes auf der besagten Anzeige darzustellen, und bei dem das besagte Untermenügegenstandssignal jeweils angepasst ist, um mindestens einen Teil eines Untermenügegenstandes eines zweiten Menügegenstandes auf der besagten Anzeige darzustellen.

20. Portal-Signal nach Anspruch 19, bei dem mindestens die meisten der besagten Untermenügegenstände (111-115) des besagten ersten Menügegenstandes (110) personalisiert sind und wobei mindestens die meisten der besagten Untermenügegenstände (121-127) des besagten zweiten Menügegenstandes (120) nicht personalisiert sind.

## Revendications

1. Serveur (7) destiné à offrir un portail Internet doté d'un menu (100) comprenant des options de menu (110, 120, 130, 140, 150) à un terminal mobile (1) et comprenant :
- un module de transmission (75) destiné à transmettre un signal de portail au dit terminal, lequel signal de portail comprenant des signaux d'options de menu destinés à afficher chacun au moins une partie d'une option de menu sur un écran dudit terminal, ledit signal de portail comprenant lesdits signaux d'options de menu étant stocké dans ledit serveur,
**caractérisé par**
- un module de réception (74) destiné à recevoir un signal d'activation provenant dudit terminal afin d'activer une option de menu, le signal d'activation comprenant un code d'option de menu définissant une option de menu, dans lequel au moins une partie desdites options de menu sont reliées chacune à au moins deux options de sous-menu (111-115, 121-127, 131-139, 141-146, 151-155), et
- un module de génération (76) destiné à générer, en réponse à un premier code d'option de menu, des signaux d'options de sous-menu destinés à afficher chacun au moins une partie d'une option de sous-menu d'une première option de menu sur ledit écran, et à générer, en réponse à un deuxième code d'option de menu, des signaux d'options de sous-menu destinés à afficher chacun au moins une partie d'une option de sous-menu d'une deuxième option de menu sur ledit écran.

2. Serveur selon la revendication 1, dans lequel au moins la plupart desdites options de sous-menu (111-115) de ladite première option de menu (110) sont personnalisées, et au moins la plupart desdites options de sous-menu (121-127) de ladite deuxième option de menu (120) ne sont pas personnalisées.

3. Serveur selon la revendication 1 ou 2, dans lequel ledit serveur comprend un module d'adressage (77) destiné à adresser, en réponse à une réception provenant dudit terminal d'un autre signal d'activation comprenant un code d'option de sous-menu définissant une option de sous-menu, un fournisseur de services pour coupler ledit terminal au dit fournisseur de services.

4. Serveur selon la revendication 1, 2 ou 3, dans lequel ledit serveur comprend un module de fourniture (78) destiné à fournir, en réponse à une réception à partir dudit terminal d'un autre signal d'activation comprenant un code d'option de sous-menu définissant une option de sous-menu d'une troisième option de menu (130), des informations dépendantes du temps stockées dans ledit serveur depuis ledit serveur jusqu'au dit terminal.

5. Serveur selon la revendication 1, 2, 3 ou 4, dans lequel ledit serveur comprend un module d'ajustement (73) destiné à permettre l'ajustement, en réponse à une réception à partir dudit terminal d'un autre signal d'activation comprenant un code d'option de sous-menu définissant une option de sous-menu d'une quatrième option de menu (140), d'informations dépendantes de l'utilisateur stockées dans ledit serveur en fonction d'une réception d'un signal d'ajustement émis par ledit terminal.

6. Serveur selon la revendication 1, 2, 3, 4 ou 5, dans lequel cinq options de menu offrent des informations dépendantes du temps (130), des services personnalisés (110), des services non personnalisés (120), l'ajustement d'informations dépendantes de l'utilisateur (140) et une aide (150), dans cet ordre particulier sur ledit écran.

7. Fournisseur d'accès (5) comprenant une unité de réseau (6) couplée à un serveur (7) selon la revendication 1, destiné à offrir un portail Internet doté d'un menu (100) comprenant des options de menu (110, 120, 130, 140, 150) à un terminal mobile (1) et comprenant :
- un module de transmission (75) destiné à transmettre un signal de portail au dit terminal par l'intermédiaire de ladite unité de réseau, lequel signal de portail comprend des signaux d'options de menu pour afficher chacun au moins une partie d'une option de menu sur un écran dudit terminal, ledit signal de portail comprenant lesdits signaux d'options de menu étant stocké dans ledit serveur,
**caractérisé par**
- un module de réception (74) destiné à recevoir un signal d'activation provenant dudit terminal par l'intermédiaire de ladite unité de réseau afin d'activer une option de menu, le signal d'activation comprenant un code d'option de menu définissant une option de menu, dans lequel au moins une partie desdites options de menu sont reliées chacune à au moins deux options de sous-menu (111-115, 121-127, 131-139, 141-146, 151-155), et
- un module de génération (76) destiné à générer, en réponse à un premier code d'option de menu, des signaux d'options de sous-menu destinés à afficher chacun au moins une partie d'une option de sous-menu d'une première option de menu sur ledit écran, et destinés à générer, en réponse à un deuxième code d'option de menu, des signaux d'options de sous-menu destinés à afficher chacun au moins une partie d'une option de sous-menu d'une deuxième option de menu sur ledit écran.

8. Fournisseur d'accès selon la revendication 7, dans lequel au moins la plupart desdites options de sous-menu (111-115) de ladite première option de menu (110) sont personnalisées, et au moins la plupart desdites options de sous-menu (121-127) de ladite deuxième option de menu (120) ne sont pas personnalisées.

9. Fournisseur d'accès selon la revendication 7 ou 8, dans lequel ledit fournisseur d'accès comprend un module d'adressage (77) destiné à adresser, en réponse à une réception provenant dudit terminal par l'intermédiaire dudit terminal réseau d'un autre signal d'activation comprenant un code d'option de sous-menu définissant une option de sous-menu, un fournisseur de services pour coupler ledit terminal au dit fournisseur de services par l'intermédiaire de ladite unité de réseau.

10. Fournisseur d'accès selon la revendication 7, 8 ou 9, dans lequel ledit fournisseur d'accès comprend un module de fourniture (78) destiné à fournir, en réponse à une réception à partir dudit terminal d'un autre signal d'activation comprenant un code d'option de sous-menu définissant une option de sous-menu d'une troisième option de menu (130), des informations dépendantes du temps stockées dans ledit serveur depuis ledit serveur jusqu'au dit terminal par l'intermédiaire de ladite unité de réseau.

11. Fournisseur d'accès selon la revendication 7, 8, 9 ou 10, dans lequel ledit fournisseur d'accès comprend un module d'ajustement (73) destiné à permettre l'ajustement, en réponse à une réception à partir dudit terminal par l'intermédiaire de ladite unité de réseau d'un autre signal d'activation comprenant un code d'option de sous-menu définissant une option de sous-menu d'une quatrième option de menu (140), d'informations dépendantes de l'utilisateur stockées dans ledit serveur en fonction d'une réception d'un signal d'ajustement émis par ledit terminal par l'intermédiaire de ladite unité de réseau.

12. Fournisseur d'accès selon la revendication 6, 7, 8, 9, 10 ou 11, dans lequel cinq options de menu offrent des informations dépendantes du temps (130), des services personnalisés (110), des services non personnalisés (120), l'ajustement d'informations dépendantes de l'utilisateur (140) et une aide (150), dans cet ordre particulier sur ledit écran.

13. Procédé permettant d'offrir un portail Internet doté d'un menu comprenant des options de menu à un terminal mobile et comprenant les étapes consistant à :
- transmettre un signal de portail au dit terminal, lequel signal de portail comprend des signaux d'options de menu pour afficher chacun au moins une partie d'une option de menu sur un écran dudit terminal, ledit signal de portail comprenant lesdits signaux d'options de menu étant stocké dans un serveur
**caractérisé par**
- la réception d'un signal d'activation provenant dudit terminal pour activer une option de menu, le signal d'activation comprenant un code d'option de menu définissant une option de menu, dans lequel au moins une partie desdites options de menu sont reliées chacune à au moins deux options de sous-menu, et
- la génération, en réponse à un premier code d'option de menu, de signaux d'options de sous-menu pour afficher chacun au moins une partie d'une option de sous-menu d'une première option de menu sur ledit écran, et pour générer, en réponse à un deuxième code d'option de menu, des signaux d'options de sous-menu pour afficher chacun au moins une partie d'une option de sous-menu d'une deuxième option de menu sur ledit écran.

14. Procédé selon la revendication 13, dans lequel au moins la plupart desdites options de sous-menu de ladite première option de menu sont personnalisées, et au moins la plupart desdites options de sous-menu de ladite deuxième option de menu ne sont pas personnalisées.

15. Produit de programme de processeur comprenant un code pour exécuter des fonctions lorsqu'il est exécuté sur un serveur offrant un portail Internet doté d'un menu comprenant des options de menu à un terminal mobile selon la revendication 1 et comprenant :
- une fonction de transmission pour transmettre un signal de portail au dit terminal, lequel signal de portail comprend des signaux d'options de menu pour afficher chacun au moins une partie d'une option de menu sur un écran dudit terminal, ledit signal de portail comprenant lesdits signaux d'options de menu étant stocké dans ledit serveur
**caractérisé par**
- une fonction de réception pour recevoir un signal d'activation provenant dudit terminal afin d'activer une option de menu, le signal d'activation comprenant un code d'option de menu définissant une option de menu, dans lequel au moins une partie desdites options de menu sont reliées chacune à au moins deux options de sous-menu, et
- une fonction de génération pour générer, en réponse à un premier code d'option de menu, des signaux d'options de sous-menu pour afficher chacun au moins une partie d'une option de sous-menu d'une première option de menu sur ledit écran, et pour générer, en réponse à un deuxième code d'option de menu, des signaux d'options de sous-menu pour afficher chacun au moins une partie d'une option de sous-menu d'une deuxième option de menu sur ledit écran.

16. Programme de processeur selon la revendication 15, dans lequel au moins la plupart desdites options de sous-menu de ladite première option de menu sont personnalisées, et au moins la plupart desdites options de sous-menu de ladite deuxième option de menu ne sont pas personnalisées.

17. Terminal mobile (1) conçu pour être utilisé en combinaison avec un serveur (7) offrant un portail Internet doté d'un menu (100) comprenant des options de menu (110, 120, 130, 140, 150) selon la revendication 1 au dit terminal mobile (1) et ledit terminal mobile comprenant un code pour exécuter des fonctions lorsqu'il est exécuté comprenant :
- un module de réception (75) destiné à recevoir un signal de portail transmis au dit terminal mobile comprenant un code pour exécuter des fonctions lorsqu'il est exécuté, lequel signal de portail comprend des signaux d'options de menu pour afficher chacun au moins une partie d'une option de menu sur un écran dudit terminal mobile comprenant un code pour exécuter des fonctions lorsqu'il est exécuté, ledit signal de portail comprenant lesdits signaux d'options de menu étant stocké dans ledit serveur (7)
**caractérisé par**
- un module de transmission (74) destiné à transmettre un signal d'activation provenant dudit terminal mobile vers ledit serveur afin d'activer une option de menu, lequel signal d'activation comprend un code d'option de menu définissant une option de menu, dans lequel au moins une partie desdites options de menu sont reliées chacune à au moins deux options de sous-menu (111-115, 121-127, 131-139, 141-146, 151-155),
- le module de réception étant conçu pour recevoir des signaux d'options de sous-menu provenant du serveur.

18. Terminal mobile selon la revendication 17, dans lequel au moins la plupart desdites options de sous-menu (111-115) de ladite première option de menu (110) sont personnalisées, et au moins la plupart desdites options de sous-menu (121-127) de ladite deuxième option de menu (120) ne sont pas personnalisées.

19. Signal de portail conçu pour offrir un portail Internet doté d'un menu (100) comprenant des options de menu (110, 120, 130, 140, 150) par l'intermédiaire d'un serveur (7) selon la revendication 1, ledit signal de portail comprend des signaux d'options de menu destinés à afficher au moins une partie d'une option de menu sur un écran dudit terminal mobile comprenant un code pour exécuter des fonctions lorsqu'il est exécuté, ledit signal de portail comprenant lesdits signaux d'options de menu étant stocké dans ledit serveur (7),
**caractérisé par**
ledit signal de portail comprenant en outre un signal d'activation provenant dudit terminal mobile, comprenant un code pour exécuter des fonctions lorsqu'il est exécuté, par l'intermédiaire de ladite unité de réseau afin d'activer une option de menu, lequel signal d'activation comprend un code d'option de menu définissant une option de menu, dans lequel au moins une partie desdites options de menu sont reliées chacune à au moins deux options de sous-menu (111-115, 121-127, 131-139, 141-146, 151-155), et les signaux d'options de sous-menu étant chacun conçus pour afficher au moins une partie d'une option de sous-menu d'une première option de menu sur ledit écran, et lesdits signaux d'options de sous-menu étant chacun conçus pour afficher au moins une partie d'une option de sous-menu d'une deuxième option de menu sur ledit écran.

20. Signal de portail selon la revendication 19, dans lequel au moins la plupart desdites options de sous-menu (111-115) de ladite première option de menu (110) sont personnalisées, et au moins la plupart desdites options de sous-menu (121-127) de ladite deuxième option de menu (120) ne sont pas personnalisées.
